(19) Europäisches Patentamt
European Patent Office
Office européen des brevets

(11) Publication number: **0 060 311**
**B1**

(12) **EUROPEAN PATENT SPECIFICATION**

(45) Date of publication of patent specification: **05.12.84**

(21) Application number: **81101960.3**

(22) Date of filing: **16.03.81**

(51) Int. Cl.$^3$: **C 09 D 3/74,** C 09 D 3/80, C 08 J 7/04, B 65 D 65/40

# (54) Composition and process for coating films to be used in the packaging and wrapping field.

(43) Date of publication of application:
**22.09.82 Bulletin 82/38**

(45) Publication of the grant of the patent:
**05.12.84 Bulletin 84/49**

(84) Designated Contracting States:
**BE DE FR GB NL SE**

(56) References cited:
**FR-A-2 442 877**
**GB-A- 973 305**

(73) Proprietor: **SOCIETA' ITALIANA RESINE S.I.R. S.p.A.**
**Via Grazioli 33**
**I-20161 Milano (IT)**

(72) Inventor: **Vargiu, Silvio**
**Via Roma 76**
**I-22064 Casatenovo (Como) (IT)**
Inventor: **Buzio, Pierpaolo**
**Via Pindemonte 23**
**I-20017 Rho (Milano) (IT)**
Inventor: **Gualandi, Volfango**
**Via Grandi 4**
**I-20050 Macherio (Milano) (IT)**
Inventor: **Edefonti, Lucio**
**Via Nievo 24**
**I-21052 Busto Arsizio (Varese) (IT)**

(74) Representative: **Jacobacci, Filippo et al**
**c/o JACOBACCI-CASETTA & PERANI S.p.A. Via Alfieri 17**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 060 311 B1

Courier Press, Leamington Spa, England.

**Description**

The present invention relates to a composition and a process for coating films, such as polymeric films, to be used in the wrapping and packaging field.

Generally the films used for wrapping and packaging, especially food products, are coated to give them slip, anti-static and other machinability properties, heat weldability and improved barrier properties (impermeability to gases and vapours). Among the coating compositions most used are those based on vinyl and vinylidene polymers and acrylic of methacrylic ester polymers on account of their marked ability to simultaneously confer satisfactory characteristics of ease of handling, impermeability and heat weldability on the films to which they are applied. In this connection reference is made to U.S. Patents Nos. 2,805,963, 2,829,068, 2,829,069 and to FR—A—2,442,877.

One of problems which most afflict these coating compositions is that they do not adhere stably to the films to which they are applied. Thus, for example, the surfaces of polyolefin films and other films which are poorly receptive to coatings of any type must be pretreated with, for example, chemical agents, non-perforating continuous electric discharges or flame action. Examples of film-surface treatments are given, for example, in U.K. Patents Nos. 811,370, 834,196 842,104 and 910,317.

Despite these treatments, which have the effect of creating functional groups on the surfaces, the reactivity of these surfaces is generally insufficient to allow good adhesion of the aforesaid coating compositions.

Recourse has therefore been made, in the art, to the additional application of adhesion promoters (primers), generally chosen from pre-polymerized polyesters, polyurethanes, isocyanates and polyimines as described, for example, in U.K. Patent No. 677,926, U.S. Patent No. 2,876,067 and Belgian Patent No. 626,363. The application of adhesion promoters improves the adhesion of the coatings to the support film, but the results still do not satisfy all the requirements of the users of the coated films.

More recently, recourse has been made, during the preparation of the polymers used in the coating compositions, to the addition of resins which react with the starting monomers. This method, together with the pre-treatment of the film surfaces and the application of adhesion promoters, has resulted in considerable improvements in the anchorage of the coatings to the support films but is not completely satisfactory because of its deleterious influence, sometimes even considerable, on the optical characteristics of the finished product.

These disadvantages have been overcome by the coating composition of the present invention which allows coated films to be made with very good optical properties, handling qualities and impermeability and weld strength characteristics, together with high, stable adhesion of the coating to the support film, even in the absence of the adhesion promoters of the known art.

The invention provides a coating composition for films to be used in the packaging and wrapping field, in particular polymeric films such as the polyesters and polyolefins, based on a polymeric material chosen from vinyl and vinylidene chloride homopolymers and copolymers, acrylic and methacrylic ester homopolymers and copolymers and mixtures thereof, characterized in that it contains at least one additive constituted by an organic substance having epoxy groups and aliphatic unsaturation, obtained by the reaction of one or more unsaturated aliphatic monocarboxylic acids, and/or monoesters of unsaturated aliphatic dicarboxylic acids, with a stoichiometric excess of epoxy or epoxy novolak resin, so that part of the epoxy groups of said resin are left unchanged in the reaction.

According to another aspect of the invention, there is provided a process for precoating films to be used in the wrapping and packaging field with the said coating composition.

The epoxy resins useful for the preparation of the additives of the present invention are compounds definable by means of the general formula:

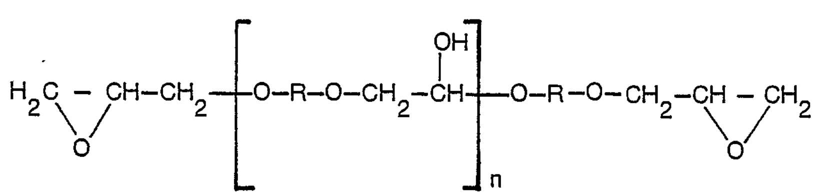

(I)

where R represents an aryl, cycloalkyl or alkyl radical and *n* has values of from 0 to about 19.

One class of resins defined by the general formula (I), in which —O—R—O— is a diphenyl radical, is obtained in the art by the reaction of a diphenol with epichlorohydrin in the presence of an inorganic base. Particularly useful resins belonging to this class are those obtained from 2,2-bis(4-hydroxyphenyl) propane (bisphenol-A) and epichlorohydrin, as described, for example, in U.S. Patents Nos. 4,017,523 and 4,132,718.

Another class of epoxy resins may be obtained from epichlorohydrin and aliphatic or cycloaliphatic diols. In this case, the diol is reacted with epichlorohydrin in the presence of an alkylation catalyst and the product obtained is treated with an inorganic base. Particularly useful resins in this class are obtained from 2,2-bis(4-hydroxycyclohexyl) propane and epichlorohydrin as described, for example, in U.S. Patent No. 3,781,244.

The epoxy novolak resins, as is known, are the products of the epoxidation of phenolic novolak resins, these last resins being the condensation products of phenol and/or substituted phenols with formaldehyde as described, for example, in U.S. Patents Nos. 3,860,561 and 3,867,346.

One class of epoxy novolak resins which is particularly useful for the preparation of the additives of the present invention is obtained by the reaction of epichlorohydrin with a phenolic novolak resin (product of the condensation of phenol with formaldehyde) in the presence of an inorganic base and can be represented by the general formula:

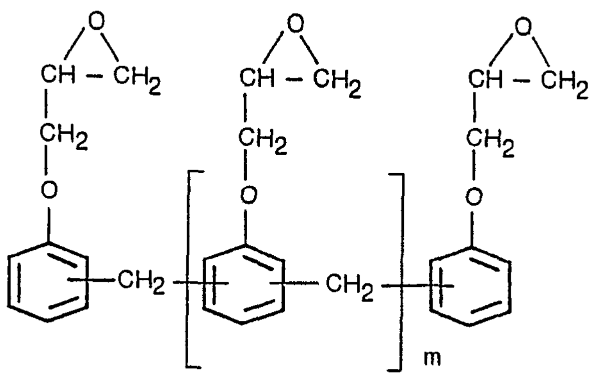

(II)

in which *m* may vary from 0 to about 10.

The additives of the present invention are prepared by reacting the epoxy resin or the epoxy novolak resin with an unsaturated aliphatic monocarboxylic acid, or with a monoester of an unsaturated aliphatic dicarboxylic acid, in ratios such as to make at least 10 per cent but not more than 90 per cent of the epoxy groups of the epoxy or epoxy novolak resin react with the acid.

The unsaturated aliphatic monocarboxylic acids may contain up to 20 carbon atoms per molecule, but short chain acids, such as acrylic or methacrylic acid, are preferable.

The air drying fatty acids, which are known to be useful in the preparation of epoxy modified resins for metal coatings, as for ex. in GB—A—973,305, are not suitable for the invention's compositions.

The monoesters of the unsaturated aliphatic dicarboxylic acids are preferably chosen from the monoesters of maleic or fumaric acid with a monohydric alcohol having from 1 to 12 carbon atoms per molecule.

The reaction of the monocarboxylic acid or the monoester of the dicarboxylic acid with the epoxy resin or the epoxy novolak resin is generally carried out at a temperature of from 100° to 240°C for a time such as to reduce the acid value of the reaction mixture to negligibly low values.

In a preferred embodiment of the present invention from 30 to 70 per cent of the epoxy groups of the epoxy or epoxy novolak resins are made to react, the fact that one epoxy group of the resin interacts with one molecule of the monocarboxylic acid or of the monoester of the dicarboxylic acid being taken into account. Best results are generally obtained with additives in which the ratio between epoxy groups and aliphatic double bonds is equal to or of the order of 1:1.

By way of example, if the epoxy resin (1) is reacted with acrylic acid in equi-molecular quantities, one obtains an additive which can be represented by the general formula:

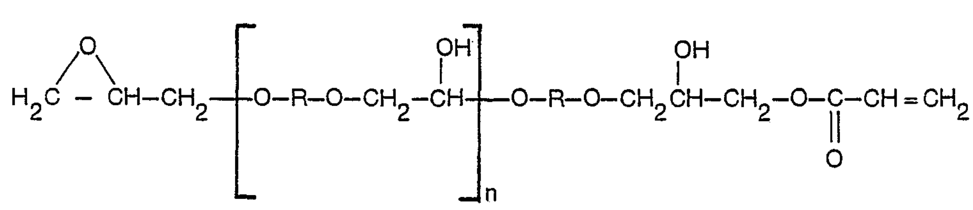

(III)

Similarly if equi- molecular quantities of the epoxy novolak resin (2) and acrylic acid are reacted one obtains an additive which can be represented by the general formula:

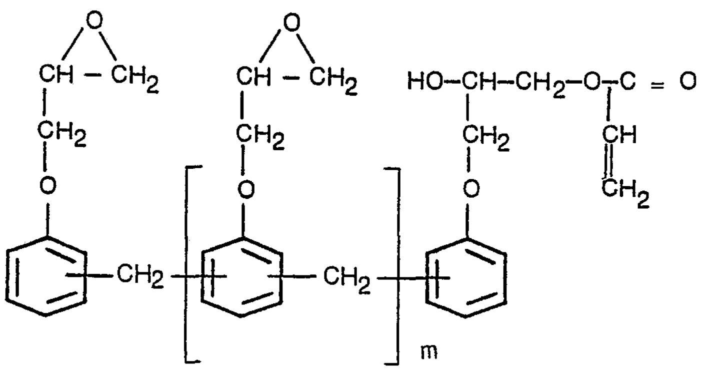

(IV)

In general, the additives are liquid or solid at ambient temperatures and have the following general characteristics:

—epoxy equivalent (number of epoxy groups in 100 g of additive): from 0.05 to 0.35
—bromine value: from 80 to 150
—acid value: from 0.1 to 20.

It has been found that the additives described above, containing epoxy groups and aliphatic unsaturations in their molecules within the ranges indicated above are efficient at achieving strong adhesion between polymeric films, especially polyolefin and polyester films, and coating polymers or copolymers and this adhesion is achieved even in the absence of adhesion promoters, for example on polyolefin films treated simply with chemical agents, continuous electric discharges or by flame action.

The quantity of additive able to bind the coating to the polymeric support is generally from 1 to 50 per cent by weight with respect to the sum of the weight of the polymeric coating material and the additive; the best results are generally obtained with an amount of additive of from 5 to 20 per cent by weight with respect to the said sum.

Preferred vinyl and vinylidene polymers and copolymers are vinyl chloride and vinyl acetate homopolymers, vinyl chloride—vinyl acetate copolymers containing from 80 to 95 per cent by weight of vinyl chloride, vinyl chloride—vinylidene chloride copolymers containing from 40 to 60 per cent by weight of vinyl chloride and vinylidene chloride—acrylonitrile copolymers containing from 80 to 95 per cent by weight of vinylidene chloride. The acrylic or methacrylic homopolymers and copolymers are generally the products of the polymerization or copolymerization of alkyl esters of acrylic and methacrylic acids, in which the alkyl group contain from 1 to 5 carbon atoms. The preferred esters are methyl, ethyl, butyl and isobutyl esters. Mixtures of two or more of the polymers and copolymers mentioned above may be used to advantage.

In one embodiment of the present invention, the acrylic and/or methacrylic ester polymers or copolymers are used in mixtures with vinyl and/or vinylidene polymers or copolymers in proportions such that these latter do not exceed 70 per cent by weight of the total weight of the mixture and the additive.

The composition according to the invention may also contain conventional additives such as waxes, slip agents, plasticizers, antistatic agents and others.

The composition of the present invention may be used in the form of a solution in an organic solvent, in the form of a dispersion in a diluent or in the absence of solvents and diluents. The composition is preferably used in the form of a solution having generally a dry matter content of from 20 to 40%, and preferably from 25 to 35%, by weight. Aromatic hydrocarbons and preferably aliphatic esters and ketones may be used as solvents.

Numerous films may be coated according to the process of the present invention. Examples are polyolefin films, formed from homopolymers or copolymers, polyester films, polyvinyl chloride films, polystyrene films, and also aluminium, paper and cellophane films. The films generally have a thickness in the range 10 to 100 microns.

The compositions of the present invention are particularly suitable for coating polyolefin and polyester films and especially for coating non-oriented, or mono- or bi-axially oriented polypropylene films. The best results are achieved by using an isotactic, bi-oriented polypropylene film as the support.

Before coating the films, and particularly polyolefin films, conventional surface treatments are generally carried out with chemical reagents such as oxidizing solutions or preferably by a flame treatment, or by electric discharge in the presence of air or another gas. An adhesion promoter may then be applied to the treated film surface although this is not indispensible for good anchorage of the coating to the support to be achieved. The adhesion promoters are usually chosen from the polyimines, such as polyethylenimine and polypropylenimine which are conveniently applied in aqueous-alcoholic solution.

The surface treatment, and also the optional application of the adhesion promoter, may be carried out by any one of the methods known in the art.

Clearly it is possible to coat only one surface of the film or both surfaces or to coat a laminate.

The coating method is not critical and may be chosen from the usual methods such as those known as gravure roll, reverse roll and kiss roll, this being followed by drying at a temperature of from 80 to 120°C, for example by passing the coated film through a tunnel through which hot gas (generally air) flows.

The quantity of coating composition (as dry matter) is generally from 1 to 3 grams per square metre of film surface. Generally it is not convenient to fall below 1 $g/m^2$ in that the coated films obtained are unsuited to many purposes, while no substantial advantages are achieved with quantities of coating composition greater than 3 $g/m^2$. The best results are obtained with quantities of coating composition of the order of 1.5 to 2 $g/m^2$.

The films are easily coated with a single application of the solution or dispersion of the composition although further layers may be applied without departing from the scope of the invention.

The introduction of the additives into the coating composition permits coated films to be obtained with surprisingly good characteristics of adhesion to the support film, together with good optical, impermeability and blocking characteristics and handling qualities.

The introduction of the additive also affords an improvement in the strength and heat-resistance of the welds.

The invention will now be illustrated by means of the following non-limitative examples.

Example 1

An epoxy resin is used which is prepared from bisphenol —A and epichlorohydrin and has an epoxy equivalent of 0.21, this being understood as the number of epoxy groups contained in 100 grams of resin.

66.25 parts by weight of methyl ethyl ketone and 430.17 parts by weight of the epoxy resin described above are loaded into a reactor furnished with an agitator, a reflux condenser and temperature regulating jacket, operating in the presence of a flow of nitrogen. The temperature of the reactor is brought to 100°C and 77.07 parts by weight of mono-isobutyl ester of maleic acid are added over a period of 20 minutes while the temperature is brought to about 120°C. This temperature is maintained until the acid value of the product is in the range 0.5 to 1.2, expressed as mg of KOH per gram, and until said product has a viscosity of from 40 to 60 cps [(4—6) $10^{-2}$ Pa. s] evaluated at 25°C in a 50% by weight solution in methyl ethyl ketone.

Thus an additive is obtained having an epoxy equivalent value of 0.066 to 0.077, given as the number of epoxy groups per 100 grams of the additive, and a viscosity within the range of values indicated above.

Example 2

Operating as in Example 1, an additive is prepared by using 100 parts by weight of epoxy novolak resin having an epoxy equivalent of 0.55 and 31 parts by weight of the mono-isobutyl ester of maleic acid.

The epoxy novolak resin is the product of the reaction of epichlorohydrin with a phenolic novolak resin obtained by the condensation of formaldehyde with phenol.

The additive thus obtained has an acid value of 1.0 and an epoxy equivalent value of 0.33.

Example 3

Operating as in Example 1, an additive is prepared by using 100 parts by weight of epoxy resin (from bisphenol —A and epichlorohydrin) having an epoxy equivalent of 0.21 and 17.8 parts by weight of the mono-isobutyl ester of maleic acid. The additive thus obtained has an acid value of 0.6 and an epoxy equivalent value of 0.77.

Example 4

Operating as in Example 1, an additive is prepared by using 100 parts by weight of the epoxy resin of Example 3 and 13.5 parts by weight of the monomethyl ester of maleic acid. The additive thus obtained has an acid value of 1.2 and an epoxy equivalent value of 0.087.

Example 5

Operating as in Example 1, an additive is prepared by using 100 parts by weight of the epoxy resin of Example 3 and 23.8 parts by weight of the mono- iso-octyl ester of maleic acid. The additive thus obtained has an acid value of 0.3 and an epoxy equivalent value of 0.072.

Example 6

An isotactic, biaxially-oriented polypropylene film is used having a thickness of 25 microns, a longitudinal tensile strength of 10 kg-mm$^2$, a transverse tensile strength of 22 kg/mm$^2$, a longitudinal elongation at break of 200% and a transverse elongation at break of 40%, these determinations being carried out according to the ASTM D—882 method (procedure A). One face of this polypropylene film is treated by means of electric discharges to confer on the treated film a wettability of 40 dyne/cm, based on the ASTM D—2578 method.

To the treated surface of the film is applied a 1% by weight solution of polyethylenimine in aqueous alcohol, as a primer, in an amount of 100 mg (as dry matter) for every m$^2$ of surface, by using the gravure roll method.

A coating composition is prepared by mixing the following ingredients, expressed in parts by weight, in 2-butanone:

| | |
|---|---|
| —methyl methacrylate-butyl methacrylate copolymer with a methyl methacrylate content of 70 wt.%, having a molecular weight of 20,000 (commercial product ELVACITE 2013 of the DU PONT Company) | 80 |
| —additive of Example 1 | 20 |
| —carnauba wax | 1.5 |
| —slip agent (SYLOID 166 of the GRACE Company) | 0.1 |
| —emulsifying agent (sorbitan tristearate, commercial product SPAN 65 of the ATLAS Company) | 0.5 |
| —antistatic agent (quaternary ammonium salt, commercial product LOBROL PE of ICI). | 0.25 |

This composition is dissolved in n-butanone to give a concentration of 25% by weight.

The solution obtained is applied to the treated surface of the polypropylene film in an amount of 1.5 g (dry matter) per square metre of surface by the gravure roll coating technique.

The coated film, after drying in a tunnel with hot air at 100°C, has the following characteristics:

| | |
|---|---|
| —Adhesion (determined by means of tearing off with an adhesive strip; adhesiveness value of 450 g/cm$^2$) | 100% |
| —Blocking (determined after 1 hour at 55°C and at a pressure of 3 kg/cm$^2$ according to the ASTM D 1146—53 method) | None |
| —Transparency | $\leqslant$ 2% |
| —Slip (determined on the basis of the ASTM D 1894 norm) | $\leqslant$ 0.5% |
| —Weld strength (determined on the basis of ASTM D 1876—61T norm on a test piece of width 3cm, welding being carried out by a SENTINEL welding machine with a contact time of one second and a pressure of 3 kg/cm$^2$ at a temperature of 120°C) | > 650 g/3cm |
| —Holding of the weld at 120°C (determined with calibrated leaf springs) | $\geqslant$ 150 g/3cm |

The characteristics indicated above are also shown in the Table which follows.

Example 7

There is used the following formulation expressed in parts by weight:

| | |
|---|---|
| —Polymethyl methacrylate with a molecular weight of 20,000 (product ELVACITE 2,008 of the DU PONT company) | 70 |
| —Additive of Example 1 | 30 |
| —Carnauba wax | 1.5 |
| —Slip agent (SYLOID 166 of the GRACE Company) | 0.1 |
| —Emulsifying agent (SPAN 65 of the ATLAS Company) | 0.5 |

The composition is dissolved in 2-butanone to give a solution with a concentration of 25 per cent by weight. Coating is carried out as in Example 6, a coated film being obtained with the characteristics given in the Table which follows.

Example 8

There is used the following formulation expressed in parts by weight:

| | |
|---|---|
| —Butyl methacrylate—methyl methacrylate copolymer with a methyl methacrylate content of 70% by weight, and a molecular weight of 20,000 (product ELVACITE 2013 of the DU PONT Company) | 45 |
| —Polyethyl methacrylate with a molecular weight of 18,000 (product ELVACITE 2043 of the DU PONT Company) | 45 |
| —Additive of Example 1 | 10 |
| —Carnauba wax | 1.5 |
| —Slip agent (SYLOID 166 of the GRACE Company) | 0.1 |
| —Slip agent of the Nippon Fine Chem Company NEUTRON S (erucamide) | 0.5 |
| —Anti-static agent (LUBROL PE of ICI) | 0.25 |

The composition is dissolved in 2-butanone to gived a solution with a concentration of 25% by weight. The coating is carried out as in Example 6, a coated film being obtained with the characteristics given in the Table which follows.

Example 9

There is used the following formulation expressed in parts by weight:

| | |
|---|---|
| —Vinyl chloride—vinyl acetate copolymer with a vinyl chloride content of 87% by weight and a molecular weight of 20,000 (product VINYLITE VYHH of the UNION CARBIDE Company) | 50 |

| | |
|---|---|
| —Poly-t-butyl methacrylate with a molecular weight of 200,000 (product PLEXIGUM P 24 of the ROHM and HAAS Company) | 30 |
| —Additive of Example 1 | 20 |
| —Polyethylene wax (product H1N3 SASD of the SPICA Company) | 1 |
| —Carnauba wax | 0.5 |
| —Emulsifying agent (sorbitol tristearate, product SPAN 65 of the ATLAS Company) | 0.75 |
| —Slip agent (product SYLOID 166 of the GRACE Company) | 0.1 |

The composition is dissolved in 2-butanone to give a solution with a concentration of 25 per cent by weight. The coating is carried out as in Example 6, a coated film being obtained having the characteristics given in the following Table.

Example 10

There is used the following formulation expressed in parts by weight:

| | |
|---|---|
| —Vinyl chloride—vinyl acetate copolymer with a vinyl chloride content of 87% by weight and a molecular weight of 20,000 (product VINYLITE VYHH of the UNION CARBIDE Company) | 57 |
| Butyl methacrylate—methyl methacrylate copolymer with a methyl methacrylate content of 70% by weight and a molecular weight of 20,000 (product ELVACITE 2013 of the DU PONT Company) | 28 |
| —Additive of Example 1 | 15 |
| —Polyethylene wax H1N3 SASOL of the SPICA Company | 1 |
| —Carnauba wax | 0.5 |
| —Emulsifying agent (product SPAN 65 of the ATLAS Company) | 0.75 |
| —Slip agent (product SYLOID 166 of the GRACE Company | 0.1 |

The composition is dissolved in 2-butanone to give a solution with a concentration of 25% by weight. The coating is carried out as in Example 6, a coated film being obtained which has the characteristics given in the following Table.

Example 11

There is used the following formulation expressed in parts by weight:

| | |
|---|---|
| —Vinyl chloride—vinyl acetate copolymer with a vinyl chloride content of 85% by weight and a molecular weight of 18,000 (product VINNOL E 15/45 of the WACKER Company) | 55 |

| | |
|---|---|
| —Polymethyl methacrylate with a molecular weight of 20,000 (product ELVACITE 2008 of the DU PONT Company | 35 |
| —Additive of Example 1 | 10 |
| —Polyethylene wax H1N3 SASOL of the SPICA Company | 1 |
| —Carnauba wax | 0.5 |
| —Emulsifying agent (product SPAN 65 of the ATLAS Company) | 0.75 |
| —Slip agent (product SYLOID 166 of the GRACE Company | 0.1 |

The composition is dissolved in 2-butanone to give a solution having a concentration of 25% by weight. The coating is carried out as in Example 6, a coated film being obtained which has the characteristics given in the following Table.

Example 12

There is used the following formulation expressed in parts by weight:

| | |
|---|---|
| —Vinyl chloride—vinyl acetate copolymer with a vinyl chloride content of 65% by weight and a molecular weight of 18,000 (product VINNOL E 15/45 of the WACKER Company | 55 |
| —Polymethyl methacrylate with a molecular weight of 20,000 (product ELVACITE 2008 of the DU PONT Company) | 40 |
| —Additive of Example 1 | 5 |
| —Polyethylene wax H1N3 SASOL of the SPICA Company) | 1 |
| —Carnauba wax | 0.5 |
| —Emulsifying agent (product SPAN 65 of the ATLAS Company) | 0.75 |
| —Slip agent (product SYLOID 166 of the GRACE Company) | 0.1 |

The composition is dissolved in 2-butanone to give a solution having a concentration of 25% by weight. The coating is carried out as in Example 6, a coated film being obtained which has the characteristics shown in the Table which follows.

TABLE

| Ex. | Adhesion (%) | Blocking | Transparency (%) | Slip | Weld Strength 120°C g/3cm | Weld-Holding when hot 120°C g/3cm |
|---|---|---|---|---|---|---|
| 6 | 100 | None | ⩽2 | ⩽0.5 | >650 | >150 |
| 7 | 100 | None | ⩽1.5 | ⩽0.5 | >650 | >150 |
| 8 | 100 | None | ⩽2.2 | ⩽0.5 | >650 | >150 |
| 9 | 100 | None | ⩽2.2 | ⩽0.3 | >650 | >200 |
| 10 | 100 | None | ⩽2.2 | ⩽0.3 | >700 | >200 |
| 11 | 100 | None | ⩽2 | ⩽0.3 | >750 | >200 |
| 12 | 100 | None | ⩽1.8 | ⩽0.25 | >750 | >200 |

## Claims

1. A coating composition for films to be used in the packaging and wrapping field, based on a polymeric material chosen from vinyl and vinylidene homopolymers and copolymers, acrylic and methacrylic ester homopolymers and copolymers, and mixtures thereof, characterized in that it contains from 1% to 50% by weight, with respect of the sum of the weights of polymeric material and of additive, of one or more additives consisting of organic substances containing epoxy groups and aliphatic double bonds, obtained by reacting an unsaturated aliphatic monocarboxylic acid and/or a monoester of an unsaturated dicarboxylic acid with an epoxy or epoxy novolac resin in such a ratio that the said additive has an epoxy equivalent of from 0.05 to 0.35, a bromine value of from 80 to 150 and an acid value of from 0.1 to 20.

2. A coating composition according to claim 1 characterized in that the molar ratio between epoxy groups and aliphatic double bonds in the said additive is 1:1.

3. A composition according to claims 1 or 2 characterized in that the said unsaturated aliphatic acid is acrylic or methacrylic acid.

4. A coating composition according to claims 1 or 2 characterized in that the said monoester of an unsaturated dicarboxylic acid is chosen from the monoesters of maleic and fumaric acid with a monohydric alcohol with from 1 to 12 carbon atoms per molecule.

5. A process specially adapted for coating films having a thickness of from 10 to 100 microns by a coating composition according to claim 1 characterized in that the said coating composition is dissolved in an organic solvent up to a dry matter content of from 20% to 40% by wt., the solution is applied to at least one surface of the said film in an amount of from 1 to 3 g of composition for sq. meter of the film surface and the treated film is dried by evaporating the solvent at a temperature of from 80 to 120°C.

6. A process according to claim 5 characterized in that the organic solvent is selected from the group consisting of aromatic hydrocarbons, aliphatic esters and aliphatic ketones.

7. A process according to claims 5 or 6 characterized in that the film is a polyester or a polyolefin film.

8. A process according to claim 7 characterized in that the film is a non-oriented or a mono- or biaxially oriented polypropylene film.

## Revendications

1. Composition de revêtement pour pellicules à utiliser dans le domaine de l'empaquetage et de l'emballage, à base d'une matière polymère choisie parmi les homopolymères et copolymères de vinyle et de vinylidène, les homopolymères et les copolymères d'esters acrylique et méthacrylique, et leurs mélanges, caractérisée en ce qu'elle contient de 1 à 50% en poids, par rapport à la somme des poids de la matière polymère et de l'additif, d'un ou plusieurs additifs constitués par des substances organiques contenant des groupes époxydes et des doubles liaisons aliphatiques, obtenus par réaction d'un acide

monocarboxylique aliphatique insaturé et/ou d'un monoester d'un acide dicarboxylique insaturé avec une résine époxyde ou époxyde novolaque, dans un rapport tel que le dit additif ait un équivalent d'époxyde de 0,05 à 0,35, un indice de brome de 80 à 150 et un indice d'acide de 0,1 à 20.

2. Composition de revêtement selon la revendication 1, caractérisée en ce que le rapport molaire des groupes époxydes aux doubles liaisons aliphatiques dans cet additif est de 1:1.

3. Composition selon la revendication 1 ou 2, caractérisée en ce que cet acide aliphatique insaturé est l'acide acrylique ou méthacrylique.

4. Composition de revêtement selon la revendication 1 ou 2, caractérisée en ce que ce monoester d'un acide dicarboxylique insaturé est choisi parmi les monoesters d'acide maléique et fumarique avec un monoalcool contenant 1 à 12 atomes de carbone par molécule.

5. Procédé particulièrement adapté au revêtement de pellicules ayant un épaisseur de 10 à 100 microns par une composition de revêtement selon la revendication 1, caractérisé en ce que cette composition de revêtement est dissoute dans un solvant organique jusqu'à une teneur en matière sèche de 20 à 40% en poids, en ce que la solution est appliquée sur au moins une surface de cette pellicule à raison de 1 à 3 g de composition par m$^2$ de la surface de la pellicule et en ce que la pellicule traitée est séchée par évaporation du solvant à une température de 80 à 120°C.

6. Procédé selon la revendication 5, caractérisé en ce que le solvant organique est choisi parmi les hydrocarbures aromatiques, les esters aliphatiques et les cétones aliphatiques.

7. Procédé selon les revendications 5 ou 6, caractérisé en ce que la pellicule est une pellicule de polyester ou de polyoléfine.

8. Procédé selon la revendication 7, caractérisé en ce que la pellicule est une pellicule de polypropylène non orientée ou orientée mono- ou -biaxialement.

**Patentansprüche**

1. Ein Überzugsmittel für Filme, die auf dem Gebiet des Abpackens und Einwickelns verwendet werden, auf der Basis eines polymeren Materials ausgewählt aus Vinyl- und Vinyliden-Homopolymeren oder -Copolymeren, Acryl- oder Methacrylsäureesterpolymeren oder -copolymeren sowie Mischungen davon, dadurch gekennzeichnet, daß es ein oder mehrere Additive in einer Menge von 1 bis 50 Gewichts-%, bezogen auf die Summe der Gewichtsanteile vom Polymermaterial und Additiv, enthält und daß das Additiv aus Epoxigruppen und aliphatische Doppelbindungen aufweisenden organischen Substanzen besteht, die durch die Umsetzung einer ungesättigten aliphatischen Monocarbonsäure und/oder eines Monoesters einer ungesättigten Dicarbonsäure mit einem Epoxidharz oder Epoxinovolakharz in einem solchen Verhältnis erhalten worden ist, daß das Additiv ein epoxiäquivalent zwischen 0,05 und 0,35, eine Bromzahl zwischen 80 und 150 sowie eine Säurezahl zwischen 0,1 und 20 hat.

2. Ein Überzugsmittel gemäß Anspruch 1, dadurch gekennzeichnet, daß das molare Verhältnis zwischen Epoxigruppen und aliphatischen Doppelbindungen in dem Additiv 1:1 ist.

3. Ein Uberzugsmittel gemäß Patentanspruch 1 oder 2, dadurch gekennzeichnet, daß die besagte ungesättigte aliphatische Säure Acryl- oder Methacrylsäure ist.

4. Ein Uberzugsmittel gemäß Patentanspruch 1 oder 2, dadurch gekennzeichnet, daß der besagte Monoester einer ungesättigten Dicarbonsäure ausgewählt ist aus Monoestern der Malein- und Fumarsäure mit einem einwertigen Alkohol mit 1 bis 12 C-Atomen pro Molekül.

5. Ein Verfahren besonders geeignet zum Uberziehen von Filmen mit einer Dicke von 10 bis 100 $\mu$m (microns) mit einem Uberzugsmittel gemäß Patentanspruch 1, dadurch gekennzeichnet, daß das besagte Überzugsmittel in einem organischen Lösungsmittel bis zu einem Festkörpergehalt zwischen 20 und 40 Gewichts-% gelöst ist, die Lösung auf wenigstens eine Seite des besagten Filmes in einer Menge von 1 bis 3 g des Mittels je m$^2$ der Filmoberfläche aufgebracht und der behandelte Film durch Verdampfen des Lösungsmittels bei einer Temperatur zwischen 80 und 120°C getrocknet wird.

6. Ein Verfahren nach Patentanspruch 5, dadurch gekennzeichnet, daß das organische lösungsmittel ausgewählt ist aus der Gruppe der aromatischen Kohlenwasserstoffe, der aliphatischen Ester und der aliphatischen Ketone.

7. Ein Verfahren nach Patentanspruch 5 oder 6, dadurch gekennzeichnet, daß der besagte Film ein Polyester- oder Polyolefin- Film ist.

8. Ein Verfahren nach Patentanspruch 7, dadurch gekennzeichnet, daß der Film ein nichtorientierter oder mono- oder bi- axial orientierter Polypropylenfilm ist.